# EUROPEAN PATENT APPLICATION

(11) **EP 1 939 570 A2**
(43) Date of publication of application: **02.07.2008**
(21) Application number: 07116973.4
(22) Date of filing: 21.09.2007
(51) Int. Cl.: F28D 9/00, F28F 3/02, F24F 13/30

(54) **Ventilating apparatus, heat exchange apparatus, and heat exchange element therefor**

(30) Priority: 27.12.2006 KR 20060135573
(71) Applicant: LG Electronics Inc., Seoul, 150-721 (KR)
(72) Inventor: LEE, Woo Ram, 152-848, Seoul (KR); CHOI, Keun Hyoung, Seoul (KR); CHOI, Han Lim, Gyeonggi-do (KR)
(74) Representative: Vossius & Partner

(57) **Abstract**

Ventilation apparatus, heat exchange apparatus, and heat exchange element, wherein the heat exchange element (21,22) includes a heat exchange sheet (211,221), a plurality of first ribs (212) arranged on one surface of the heat exchange sheet that guides a first gas flowing along the one surface of the heat exchange sheet, and a plurality of second ribs (222) arranged on the other surface of the heat exchange sheet and parallel to an arrangement angle of the first rib that guides a second gas flowing along the the other surface of the heat exchange sheet. The first (212) and second (222) ribs alternately support the heat exchange sheet (211,221). The heat exchange element may prevent the sag phenomenon of the heat exchange sheet without increasing duct resistance.

## Description

A ventilating apparatus, a heat exchange apparatus, and a heat exchange element therefor are disclosed herein.

Ventilating apparatus and heat exchange apparatus are known. However, they suffer from various disadvantages.

Embodiments will be described in detail with reference to the following drawings in which like reference numerals refer to like elements, and wherein:

Fig. 1 is a perspective view of an internal structure of a ventilating apparatus according to an embodiment;

Fig. 2 is a sectional view illustrating introduction/exhaust of outdoor air in the ventilating apparatus of Fig. 1;

Fig. 3 is a sectional view illustrating introduction/exhaust of indoor air in the ventilating apparatus of Fig. 1;

Fig. 4 is an exploded perspective view of a heat exchange element;

Figs. 5 and 6 are views illustrating components before forming the heat exchange element according to an embodiment;

Fig. 7 is a view illustrating the combination of the components of Figs. 5 and 6, which form one side of a heat exchange plate;

Fig. 8 is a plan view of a heat exchange plate in which the rib structures of Fig. 7 are attached to front and rear sides of a heat exchange sheet;

Fig. 9 is a view of a heat exchange plate configured with first ribs coupled to one stack rib and second ribs coupled to another stack rib arranged to cross the one stack rib at a right angle; and

Figs. 10A and 10B are sectional views illustrating the arrangement of first and second ribs alternately disposed with a heat exchange sheet interposed therebetween.

Reference will now be made in detail to embodiments, examples of which are illustrated in the accompanying drawings.

In general, a ventilating apparatus, which is an air conditioning apparatus used for ventilating an enclosed space, for example, a room, functions to heat exchange incoming outdoor air with outgoing indoor air before the outdoor air is introduced indoors. In other words, the ventilating apparatus is a kind of air conditioning apparatus that ventilates a room, such that an indoor temperature does not decrease or increase abruptly, even though the outdoor air is introduced during ventilation.

A ventilating apparatus that performs both a heat-exchange function and a moisture-exchange function between incoming air and outgoing air may be configured with a plurality of ducts that are arranged to cross one another or arranged in parallel. The outdoor air and the indoor air, which will be heat exchanged with each other, flow in different directions through each of adjacent ducts.

An important performance factor in such a ventilating apparatus is to maintain the temperature and humidity of air at an inlet portion to be almost equal to the temperature and humidity of air at an outlet portion by heat exchanging and moisture exchanging the indoor air with the outdoor air. To accomplish this, components of the heat exchanger constituting each of the ducts must have maximum heat transfer efficiency and moisture permeability, and each of the ducts must be arranged as small and compact as possible to contact air over the broadest surface area.

In addition to the above, it is necessary to minimize noise and power consumption in introducing fresh outdoor air and exhausting indoor air for ventilation. To minimize noise and power consumption, the conduit resistance of an internal heat exchange duct must be low. However, it is undesirable to reduce the size of a duct without limit and increase a length and density of a duct infinitely in order to realize the above conditions.

Therefore, to satisfy the incompatible conditions as discussed above at the same time, a variety of shapes and materials of ducts have been developed. One heat exchange duct includes heat exchange sheets and ribs that maintain the multi-stacked arrangement of the heat exchange sheets. Main heat exchange is performed through heat transfer and moisture permeation between the heat exchange sheets. The heat exchange sheet may be made of thin paper, and thus, the heat exchange sheet may sag if it absorbs moisture.

For instance, to maximally increase the heat exchange effect in ducts having the same sectional area, the heat exchange sheets may be stacked as close as possible. In addition, the rib attached to the heat exchange sheet may be made as thin as possible, and further an arrangement space of the rib may be as wide as possible. However, such a structure of the rib is inevitably adverse to the support strength of the heat exchange sheet. That is, as the heat exchange sheet is exposed to air for a long time, the heat exchange sheet absorbs moisture contained in the air, which results in sagging of the heat exchange sheet downward due to the weight of the absorbed moisture.

This sag phenomenon of the heat exchange sheet causes the sectional area of the duct to be reduced, so that duct resistance increases. Further, this sag phenomenon becomes more serious when the heat exchange element is horizontally disposed instead of standing vertically.

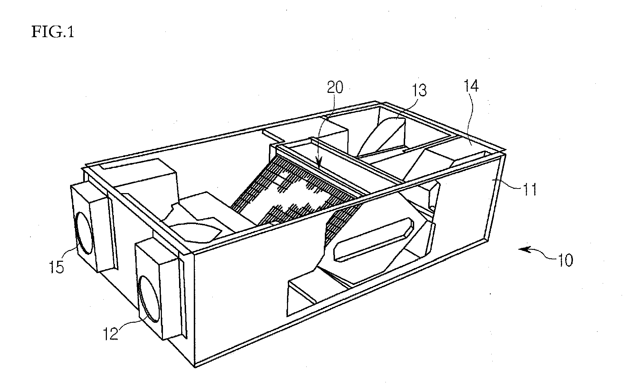

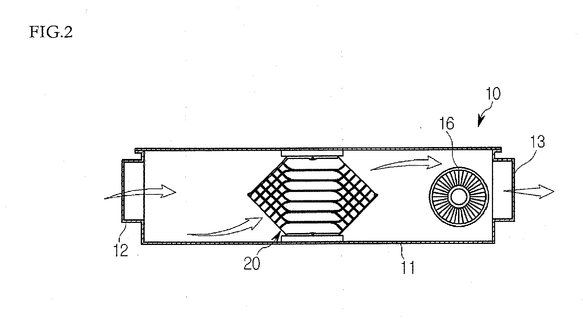

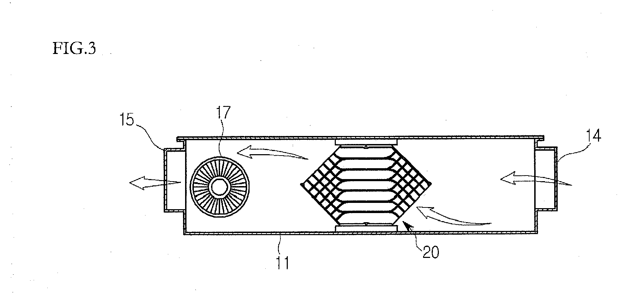

Fig. 1 is a perspective view of an internal structure of a ventilating apparatus according to an embodiment. Fig. 2 is a sectional view illustrating introduction/exhaust of outdoor air in the ventilating apparatus of Fig. 1. Fig. 3 is a sectional view illustrating introduction/exhaust of indoor air in the ventilating apparatus of Fig. 1.

Referring to Fig. 1, the ventilating apparatus 10 may include a case 11 forming an external shape, a heat exchanger 20 received in the case 11, an intake fan 16, as shown in Fig. 2, configured to introduce outdoor air, and an exhaust fan 17, as shown in Fig. 3, configured to introduce indoor air. The heat exchanger 20 may heat exchange incoming outdoor air and outgoing indoor air with each other.

An intake air inlet 12 that introduces outdoor air and an exhaust air outlet 15 that exhausts indoor air to the outside may be provided at one side of the case 11. At the other side of the case 11, an intake air outlet 13 that discharges the introduced outdoor air to the indoor space, and an exhaust air inlet 14 that introduces the indoor air may be provided.

In addition, an intake passage may be provided between the intake air inlet 12 and the intake air outlet 13, which may be in the form of a duct. The heat exchanger 20 may be positioned at a middle portion of the intake passage or duct. An exhaust passage may also be provided between the exhaust air inlet 14 and the exhaust air outlet 15, which may be in the form of a duct. The heat exchanger 20 may also be positioned at a middle portion of the exhaust passage or duct. The outdoor air introduced through the intake air inlet 12 and the indoor air introduced through the exhaust air inlet 14 may be heat exchanged with each other without being mixed, while passing through the heat exchanger 20.

As set forth above, Fig. 2 is a sectional view illustrating the introduction/exhaust of outdoor air in the ventilating apparatus 10 of Fig. 1, while Fig. 3 is a sectional view illustrating the introduction/exhaust of indoor air in the ventilating apparatus 10 of Fig. 1. Referring to Fig. 2, the intake fan 16 may be mounted inside the duct at a side of the intake air outlet 13 to introduce the outdoor air. The outdoor air may be introduced through the intake air inlet 12 by operation of the intake fan 16, and then heat exchanged with the indoor air while passing through the heat exchanger 20.

Referring to Fig. 3, the exhaust fan 17 may be mounted inside the duct at a side of the exhaust air outlet 15 to introduce the indoor air. The indoor air may be introduced through the exhaust inlet 14 by operation of the exhaust fan 17, and the indoor air may then be heat exchanged with the outdoor air while passing through the heat exchanger 20. The heat exchanger 20 may include a plurality of stacked heat exchange plates. Guide ribs may be disposed between the heat exchange sheets.

The combination structure of the heat exchange sheet and the guide ribs form a duct that guides introduced indoor air or outdoor air. The duct through which the indoor air flows and the duct through which the outdoor air flows may be cross-arranged at left and right sides of the heat exchange sheet, respectively. Therefore, the outdoor air and the indoor air may be only heat exchanged with each other without being mixed, while they pass through the heat exchanger 20.

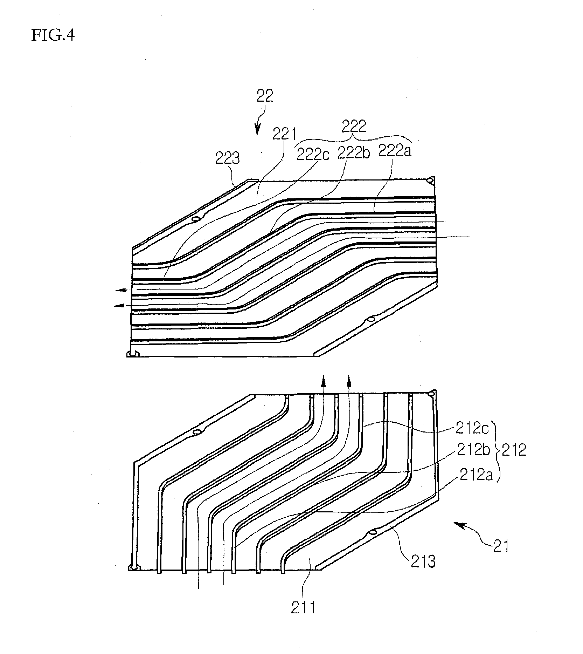

Fig. 4 is an exploded perspective view of a heat exchange element. Referring to Fig. 4, the heat exchange element may have the shape of a hexagonal plane. An intake heat exchange element 21 and an exhaust heat exchange element 22, which may have hexagonal shapes, may be alternately stacked. The intake passage and the exhaust passage may be provided between the intake heat exchange element 21 and the exhaust heat exchange element 22. More specifically, the intake heat exchange element 21 may include a heat exchange sheet 211, which may be made of a thin paper material, introduction guide ribs 212, which may be disposed on one side of the heat exchange sheet 211 such that they are spaced apart by predetermined distances, and a frame 213, which may be provided on an edge portion of the heat exchange sheet 211 to maintain the shape of the intake heat exchange element 21.

The introduction guide rib 212 may be divided into three sections, for example, an outdoor air intake section, an intermediate section, and an outdoor air exhaust section. The outdoor air intake section and the outdoor air exhaust section may be disposed on both edges of the intermediate section, respectively. The introduction guide rib 212 of the outdoor air intake section and the outdoor air exhaust section may be bent such that it is inclined at a predetermined angle with respect to the introduction guide rib 212 of the intermediate section.

In other words, the introduction guide rib 212 may be configured with an intake portion 212a, a straight portion 212b, and an exhaust portion 212c. The straight portion 212b may extend from the intake portion 212a such that it is inclined at a predetermined angle with respect to the intake portion 212a. The exhaust portion 212c may further extend from an end of the straight portion 212b such that it is inclined at a predetermined angle with respect to the straight portion 212b.

Similar to the intake heat exchange element 21, the exhaust heat exchange element 22 may include a heat exchange sheet 221, exhaust guide ribs 222, which may be disposed on one side of the heat exchange sheet 221, and a frame 223. The exhaust guide rib 222 may also be configured with an intake portion 222a, a straight portion 222b, and an exhaust portion 222c. Further, the intake portion 222a and the exhaust portion 222c of the exhaust guide rib 222 may be respectively inclined in directions symmetric to the intake portion 212a and the exhaust portion 212c of the introduction guide rib 212.

As illustrated in Figs. 2 and 3, the intake portion 212a of the introduction guide rib 212 may be inclined such that it crosses the intake portion 222a of the exhaust guide rib 222. Additionally, the exhaust portions 212c and 222c may be inclined such that they cross each other in the same manner.

The intake portion of the intake heat exchange element 21 and the intake portion of the exhaust heat exchange element 22 may cross each other, or the exhaust portion of the intake heat exchange element 21 and the exhaust portion of the exhaust heat exchange element 22 may cross each other. The intermediate sections of the introduction and exhaust guide ribs 212 and 222, in which heat exchange operation may be effectively performed, may be arranged in parallel, but incoming air and outgoing air flow in opposite directions to each other, respectively, which may make it possible to increase heat exchange efficiency as much as possible.

That is, the outdoor air and the indoor air may be heat exchanged with each other substantially more or the most in a section where they pass through the straight portions 212b and 222b than in the other sections. The heat may be sufficiently exchanged between the incoming air and the outgoing air as a length of the straight portion increases. However, this may inevitably lead to decrease of flow velocity of air.

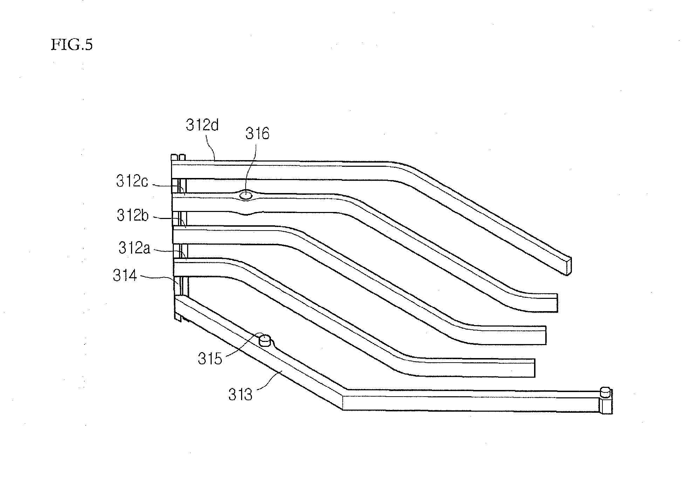

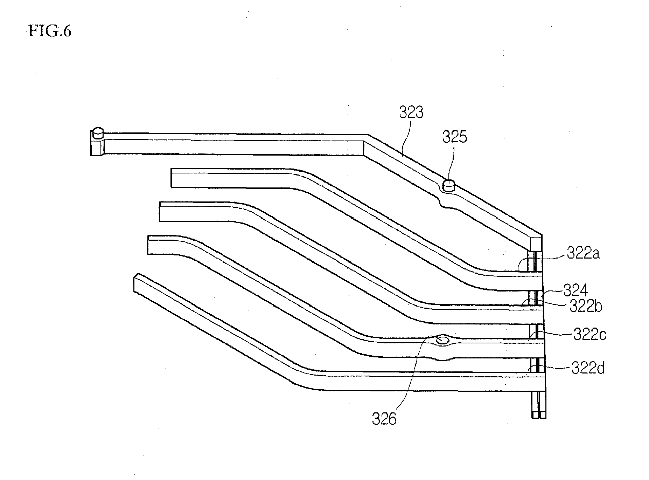

Figs. 5 and 6 are views illustrating components before forming the heat exchange element according to an embodiment. That is, Figs. 5 and 6 illustrate the combination structure of a shield rib, a stack rib, and first ribs (Fig. 4 may be interpreted as an introduction guide rib and an exhaust guide rib) at a side of the intake portion of one side of the heat exchange sheet..

Referring to Fig. 5, only one end of each of first ribs 312a~312d may be in contact with a stack rib 314. In order to secure effective handling strength under a state of half-finished goods before being attached to the heat exchange sheet, it may be necessary to maximally elongate a support length of a portion where the stack rib 314 and the first rib are in contact with each other.

Referring to Fig. 6, similar to Fig. 5, one end of each of first ribs 322a∼322d may be in contact with a stack rib 324. Again, in order to secure effective handling strength under a state of half-finished goods before being attached to the heat exchange sheet, it may be necessary to maximally elongate a support length of a portion where the stack rib 324 and the first rib are in contact with each other.

A shield ribs 313 and 323 may be provided to fixedly attach the stack ribs 314 and 324. Fixing pins 315 and 325 may be provided on each of the shield ribs 313 and 323 to stack a heat exchange plate later, and fixing pinholes (not shown) may be insertedly coupled to the pins 315, 325.

Such a fixing structure may also be provided for some of the first ribs, examples of which are fixing pinholes denoted as reference numerals 316 and 326 in Figs. 5 and 6. The pinholes 316, 326 of the first rib 312c, 322c may be aligned with a pinhole (not shown) of a second rib fixedly attached to the heat exchange sheet at an opposite side of the first rib 312c, 322c, and thus they may be coupled to each other by a fixing pin (not shown). Herein, the second rib (not shown) has the same arrangement as the first rib, but has a reverse shape with respect to the first rib, and does not coincide with the first rib when the second rib projects on one side of the heat exchange sheet.

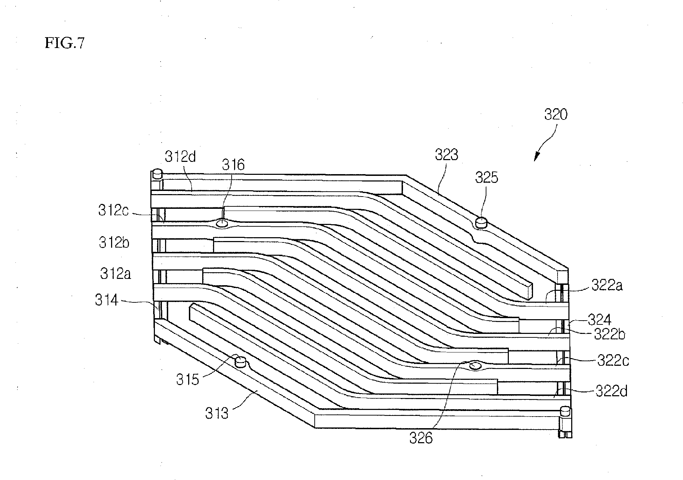

Fig. 7 is a view illustrating the combination of the components of Figs. 5 and 6, which form one side of a heat exchange plate. The first ribs at each of inlet and outlet ends, for example, air passage guide ribs, may be arranged such that they are alternately attached to only one stack rib to be communicated with adjacent ducts.

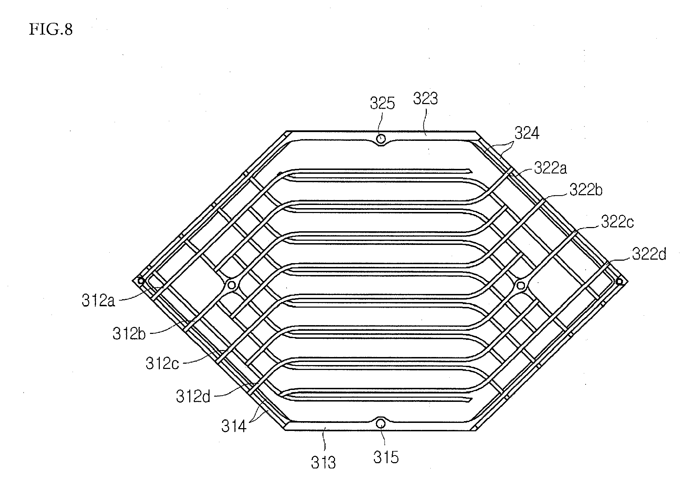

Fig. 8 is a plan view of a heat exchange plate in which the rib structures of Fig. 7 are attached to front and rear sides of the heat exchange sheet. Referring to Fig. 8, as described above, second ribs (not shown) may be arranged on a lower surface of the heat exchange plate where the first ribs 312a~312d and 322a∼322d are arranged, and the heat exchange sheet (not shown) may be interposed therebetween.

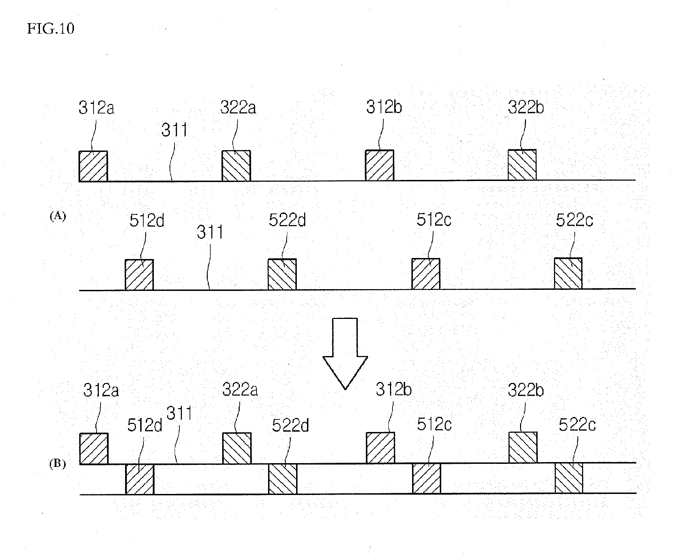

The first and second ribs may be alternately arranged in intermediate sections thereof, for example, a counter flow section where gases to be heat exchanged flow in opposite directions to each other, as illustrated in Fig. 8. This configuration may increase support points at a section where the sag phenomenon of the heat exchange sheet may be severe (see Fig. 10).

This alternately arranged structure, which may alternately support the heat exchange sheet, may be prominent at sections where the ribs extend straight. In addition, this structure may employ a guide rib for every two ribs. The guide rib may not extend to the stack rib from each of the inlet and outlet ends, for example, it may be disconnected in a middle portion.

This above configured embodiments is intended to suppress duct resistance of gases to be heat exchanged to the utmost. Accordingly, the heat exchange sheet of this embodiment may be more compactly stacked unlike other general heat exchange sheets, and the guide ribs of heat-exchanging gases may be more broadly arranged.

That is, the heat exchange duct may be realized such that it may have a very thin and long sectional area, increasing the heat exchange effect as much as possible. In this case, it may be possible to minimize pressure loss and decrease flow velocity only provided that such a sectional area of the duct must be coupled to a straight-shaped duct. The heat exchange sheet of the heat exchange plate configured as above may maximally prevent the sag phenomenon of the heat exchanger 20 caused by the moisture contained in outdoor or indoor air or by the lapse of time.

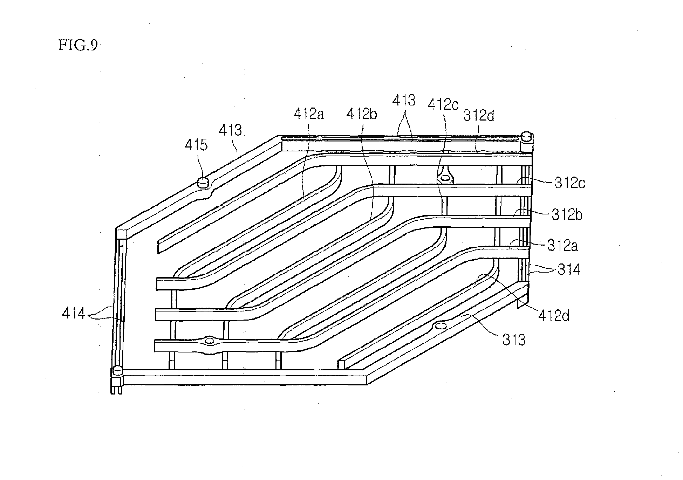

Fig. 9 is a view of a heat exchange plate configured with first ribs 312a~312d coupled to a stack rib 314 and second ribs 412a~412d coupled to a stack rib 413 arranged to cross the stack rib 314 at a right angle. In this embodiment, the stack rib 413 may not be disposed opposite to the stack rib 314, but disposed nearby the stack rib 314. As illustrated in Fig. 9, it can be observed that the ribs alternately support the heat exchange sheet (not shown) at front and rear sides of the heat exchange sheet in the counter flow section at the middle of the heat exchange plate.

This structure may be applied to a smaller and more compact heat exchanger. Furthermore, since the ribs are attached to only one side of the heat exchange sheet, this structure is beneficial to the fabrication process.

Figa. 10A and 10B are sectional views illustrating the arrangement of the first and second ribs alternately disposed with the heat exchange sheet 311 interposed therebetween, before and after the elements are combined to form a heat exchange element. In Figs. 10A and 10B, the second ribs are denoted as reference numerals 512 through 522. Figs. 10A and 10B illustrate sectional views of the heat exchange plate in a straight counter flow section.

When the second rib lines are arranged offset to some degree with respect to the first rib lines, as illustrated in Fig. 8, it may be possible to obtain a combination structure as illustrated in Fig. 10B. In this case, the first ribs lines 312∼322 and the second rib lines 512~522 may support the heat exchange sheet downward and upward with adhesive force, respectively. Assuming that the first and second rib lines support the heat exchange sheet interposed therebetween at the same points, the number of the support points may be only 4 in consideration of the structure of Fig. 8. However, according to this embodiment, the number of the support points may increase to 8 because the first and second ribs alternately support the heat exchange sheet.

The increase of the support points may prevent the sag phenomenon of the heat exchange sheet 311, and may further broaden a space (a space between the first ribs 312a and 322a or a space between the second ribs 522d and 512c) between the ribs arranged between the heat exchange sheets.

As described above, the embodiment with the straight-shaped rib structures and the wide stack rib fixing them may minimize duct resistance which may be an important factor allowing for degree of freedom in designing ribs and spaces therebetween. The rib size may be reduced even though the rib space is the same, or a number of ribs may be reduced even if the rib size is the same, which makes it possible to design the heat exchange duct more effectively.

With the heat exchanger according to embodiments disclosed herein, it may be possible to prevent the sag phenomenon of a heat exchange sheet of the heat exchange element without increasing duct resistance. In addition, the heat exchanger according to embodiments disclosed herein may reduce duct resistance and may also maximally secure a section where gases to be heat exchanged flow in opposite directions to each other in parallel, by securing a straight passage of total airflow passage provided between heat exchange sheets, and thus may improve heat transfer efficiency.

Further, a heat exchanger according to embodiments disclosed herein may improve the durability of the heat exchanger by removing the sag phenomenon of the heat exchange sheet, and reduce pressure loss of indoor and outdoor airs passing through the heat exchanger as well.

Embodiments disclosed herein provide a heat exchange element that may prevent a heat exchange sheet from sagging to a space between ribs supporting the heat exchange sheet without increasing duct resistance, a heat exchange plate having a plurality of the heat exchange element, and a heat exchanger for a ventilating apparatus having a plurality of the heat exchange plate multi-stacked.

Embodiments disclosed herein also provide a heat exchange element, a heat exchange plate, and a heat exchanger, which may reduce duct resistance and also maximally secure a section where gases to be heat exchanged flow in opposite directions to each other in parallel by securing a straight passage of a total airflow passage provided between heat exchange sheets, and thus may improve heat transfer efficiency.

Embodiments disclosed herein also provide a heat exchange element, a heat exchange plate, and a heat exchanger for a ventilating apparatus that may improve durability of the heat exchanger by removing the sag phenomenon of a heat exchange sheet.

One embodiment disclosed herein provides a heat exchange element that includes a heat exchange sheet, a plurality of first ribs arranged on one surface of the heat exchange sheet straightly, and guiding a first gas flowing along the one surface of the heat exchange sheet, and a plurality of second ribs arranged on the other surface of the heat exchange sheet straightly and parallel to an arrangement angle of the first rib, and guiding a second gas flowing along the other surface of the heat exchange sheet. The first and second ribs may alternately support the heat exchange sheet at different heights.

Further, the first and second gases may flow in parallel and opposite directions to each other. The first ribs may cross the second ribs at intake and exhaust portions of the first gas to support the heat exchange sheet. In addition, the second ribs may cross the first ribs at intake and exhaust portions of the second gas to support the heat exchange sheet.

The first and second ribs may further include a fixing device or unit penetrating the heat exchange sheet to fix the first and second ribs to each other in a section where the first and second ribs cross each other to support the heat exchange sheet. The fixing unit may include, for example, a pinhole and a fixing pin.

Another embodiment disclosed herein provides a heat exchange plate that includes a heat exchange sheet, a plurality of first ribs arranged on one surface of the heat exchange sheet, and guiding a first gas flowing along the one surface of the heat exchange sheet, a plurality of second ribs arranged on the other surface of the heat exchange sheet, and guiding a second gas flowing along the the other surface of the heat exchange sheet, stack ribs to which the first and second ribs are fixedly attached, and shield ribs fixing the stack ribs. The first and second ribs may be straightly arranged in parallel and alternately support the heat exchange sheet in a section where the first and second gases flow in directions opposite to each other.

The plurality of first ribs may be straightly cross-arranged with the second ribs at intake and exhaust portions of the first gas, and the plurality of second ribs are straightly cross-arranged with the first ribs at intake and exhaust portions of the second gas. Further, one of the first ribs and one of the second ribs corresponding to and crossing the one of the first ribs may further include a fixing unit penetrating the heat exchange sheet to fix the first and second ribs each other in a section where they are straightly cross-arranged. The fixing unit may include a pinhole and a fixing pin.

The first and second ribs may be fixedly attached to only one of the stack ribs facing each other, and they may be spaced apart from an opposite stack rib so that an end portion of each duct is not completely closed in a rib arrangement section at inlet and outlet sides. In other words, ribs of the first and second ribs fixedly attached to one stack rib may be arranged on one surface of the heat exchange sheet, and ribs fixedly attached to an opposite stack rib may be arranged on the other surface of the heat exchange sheet, which is opposite to the one surface of the heat exchange sheet. Since the rib attached to the stack rib may have a single-ended support instead of a double-ended support in cantilever type, a strength of an attachment point between the rib and the stack rib may be weakened. To complement this weak strength, the stack rib may be configured with two or more pairs of parallel ribs so as to fix the first or second rib at two points or more. A double-sided support space of the heat exchange sheet may be smaller than a single-sided support space of the heat exchange sheet, in a section where the first and second ribs alternately support the heat exchange sheet.

The shield rib may include a first fixing unit fixing the stack rib and a second fixing unit fixing the shield rib itself. The first fixing unit or the second fixing unit may include a pinhole and a fixing pin. The heat exchange plate may have a shape of a hexagonal plane, in which a section where the first and second gases flow in opposite directions may be longer than the other sections.

According to the above configuration, ribs may be alternately arranged on both sides of a heat exchange sheet so that it may be possible to narrow a support space of a heat exchange sheet as small as possible even in the case of using the same number of ribs. Accordingly, the sag phenomenon of the heat exchange sheet may be prevented, which is more prominent in a heat exchange plate where heat exchange sheets are horizontally multi-stacked.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

## Claims

1. A heat exchange element, comprising:
a heat exchange sheet;
a plurality of first ribs arranged on one surface of the heat exchange sheet that guide a first gas flowing along the one surface of the heat exchange sheet; and
a plurality of second ribs arranged on the other surface of the heat exchange sheet and extending substantially parallel to the plurality of first ribs that guide a second gas flowing along the the other surface of the heat exchange sheet, wherein the first and second ribs alternately support the heat exchange sheet.

2. The heat exchange element according to claim 1, wherein the heat exchange element and the plurality of first and second ribs are arranged such that the first and second gases flow in parallel and opposite directions to each other.

3. The heat exchange element according to claim 1 or 2, wherein the plurality of first ribs cross the plurality of second ribs at intake and exhaust portions for the first gas.

4. The heat exchange element according to claim 1, 2, or 3, wherein the plurality of second ribs cross the plurality of first ribs at intake and exhaust portions for the second gas.

5. The heat exchange element according to claim 3, wherein the plurality of first and second ribs further comprise at least one fixing device that penetrates the heat exchange sheet to fix the plurality of first and second ribs to each other in a section where the plurality of first and second ribs cross each other.

6. The heat exchange element according to claim 5, wherein the at least one fixing device comprises at least one pinhole and corresponding fixing pin.

7. The heat exchange element according to claim 4, wherein the plurality of first and second ribs further comprise at least one fixing device that penetrates the heat exchange sheet to fix the plurality of first and second ribs to each other in a section where the plurality of first and second ribs cross each other.

8. The heat exchange element according to claim 7, wherein the at least one fixing device comprises at least one pinhole and corresponding fixing pin.

9. A heat exchange apparatus comprising a plurality of the heat exchange element of any of claims 1 to 8.

10. A ventilation apparatus comprising the heat exchange apparatus of claim 9.

11. A heat exchange plate, comprising:
a heat exchange sheet;
a plurality of first ribs arranged on one surface of the heat exchange sheet, that guide a first gas flowing along the one surface of the heat exchange sheet;
a plurality of second ribs arranged on the other surface of the heat exchange sheet, that guide a second gas flowing along the other surface of the heat exchange sheet;
a plurality of stack ribs to which the plurality of first and second ribs are fixedly attached, respectively; and
a plurality of shield ribs that fix the plurality of stack ribs to one another, wherein the plurality of first and second ribs are arranged in parallel and alternately support the heat exchange sheet in a section where the first and second gases flow in directions opposite to each other.

12. The heat exchange plate according to claim 11, wherein the plurality of first ribs cross the plurality of second ribs at intake and exhaust portions for the first gas.

13. The heat exchange plate according to claim 11, wherein the plurality of second ribs cross with the plurality of first ribs at intake and exhaust portions for the second gas.

14. The heat exchange plate according to claim 11, 12, or 13, wherein at least one of the plurality of first ribs corresponding to and crossing at least one of the plurality of second ribs further comprises at least one fixing device that penetrates the heat exchange sheet to fix the plurality of first and second ribs to each other in a section where they cross one another.

15. The heat exchange plate according to claim 14, wherein the at least one fixing device comprises at least one pinhole and corresponding fixing pin.

16. The heat exchange plate according to claim 13, wherein at least one of the plurality of second ribs corresponding to and crossing at least one of the plurality of first ribs further comprise at least one fixing device that penetrates the heat exchange sheet to fix the plurality of first and second ribs to each other in a section where they cross one another.

17. The heat exchange plate according to claim 16, wherein the at least one fixing device comprises at least one pinhole and corresponding fixing pin.

18. The heat exchange plate according to claim 11, wherein the plurality of first and second ribs are fixedly attached to only one of the plurality of stack ribs facing each other.

19. The heat exchange plate according to claim 18, wherein ribs of the plurality of first and second ribs fixedly attached to one of the plurality of stack rib are arranged on one surface of the heat exchange sheet, and ribs of the plurality of first and second ribs fixedly attached to another of the plurality of stack ribs are arranged on the other surface of the heat exchange sheet, the other surface being opposite to the one surface of the heat exchange sheet.

20. The heat exchange plate according to claim 11, wherein the plurality of stack ribs is configured with two or more pairs of parallel ribs so as to fix the plurality of first or second ribs at two or more points.

21. The heat exchange plate according to claim 11, wherein a double-sided support space of the heat exchange sheet is smaller than a single-sided support space of the heat exchange sheet, in a section where the plurality of first and second ribs alternately support the heat exchange sheet.

22. The heat exchange plate according to claim 11, wherein the plurality of shield ribs comprises at least one first fixing device that fixes the one of the plurality of stack rib thereto and at least one second fixing device that fixes one of the plurality of shield ribs thereto.

23. The heat exchange plate according to claim 22, wherein the at least one first fixing device or the at least one second fixing device comprises at least one pinhole and corresponding fixing pin.

24. The heat exchange plate according to claim 11, wherein the heat exchange plate is in the shape of a hexagonal plane, and a section in which the plurality of first and second gases flow in opposite directions is longer than other sections.

25. A heat exchange apparatus comprising a plurality of the heat exchange plate of any of claims 11 to 24.

26. A ventilation apparatus comprising the heat exchange apparatus of 25.
